# EUROPÄISCHE PATENTANMELDUNG

(11) **EP 2 889 797 A2**
(43) Veröffentlichungstag der Anmeldung: **01.07.2015**
(21) Anmeldenummer: 14191596.7
(22) Anmeldetag: 04.11.2014
(51) Int. Cl.: G06F 21/55, G06F 21/71

(54) **Überwachungsvorrichtung zur Überwachung eines Schaltkreises**

(30) Priorität: 27.12.2013 DE 102013227165
(71) Anmelder: Siemens Aktiengesellschaft, 80333 München (DE)
(72) Erfinder: Falk, Rainer, 85586 Poing (DE)

(57) **Zusammenfassung**

Es wird eine Überwachungsvorrichtung (10) zur Überwachung eines Schaltkreises (1) vorgeschlagen, wobei der Schaltkreis (1) eine Hauptfunktionseinheit (20) zur Durchführung einer Hauptberechnung aufweist. Die Überwachungsvorrichtung (10) weist eine Berechnungseinheit (11) zur Durchführung einer Testberechnung parallel zu der Durchführung der Hauptberechnung und zur Bereitstellung eines Ergebnisses der Testberechnung, wobei die Berechnungseinheit (11) auf dem Schaltkreis (1) angeordnet ist, eine Prüfeinheit (12) zur Überprüfung des Ergebnisses der Testberechnung, um eine Fehlfunktion der Testberechnung zu detektieren, und eine Signalerzeugungseinheit (13) zur Erzeugung eines Signals (14) in Antwort auf das Ergebnis der Überprüfung und zur Übermittlung des Signals (14) an die Hauptfunktionseinheit (20) auf.

Durch die Anordnung der Berechnungseinheit auf demselben Schaltkreis wie die Hauptfunktionseinheit ist die Berechnungseinheit denselben Angriffen wie die Hauptfunktionseinheit ausgesetzt. Auf diese Weise können durch eine einfache Testberechnung und deren Kontrolle Angriffe erkannt werden, ohne die Hauptfunktionseinheit bzw. deren Ergebnis aufwendig überwachen bzw. prüfen zu müssen.

Des Weiteren werden ein Schaltkreis mit einer solchen Überwachungsvorrichtung sowie ein entsprechendes Verfahren zur Überwachung eines Schaltkreises vorgeschlagen.

## Beschreibung

Die vorliegende Erfindung betrifft eine Überwachungsvorrichtung zur Überwachung eines Schaltkreises sowie einen Schaltkreis mit einer solchen Überwachungsvorrichtung. Des Weiteren betrifft die Erfindung ein Verfahren zur Überwachung eines Schaltkreises und ein Computerprogrammprodukt.

Ein Sicherheitsmechanismus, insbesondere ein kryptographischer Verschlüsselungs-Algorithmus, der auf einem Schaltkreis wie beispielsweise einer integrierten Schaltung, durchgeführt wird, kann durch absichtliches Hervorrufen von Fehlern angegriffen werden, sogenannte Fault Injection Attacks. Durch ein solches gezielt hervorgerufenes fehlerhaftes Verhalten kann beispielsweise Information über den verwendeten geheimen Schlüssel ausgegeben werden oder es kann eine Abfrage zur Zulässigkeit einer Aktion übersprungen werden.

Zum Schutz vor solchen Angriffen können Schutztechniken verwendet werden, die redundante Berechnungen und Fehlercodes verwenden. Diese können jedoch aufwendige Realisierungen und spezielle Hardware oder eine mehrfache Berechnung in Software, sogenanntes coded processing, erfordern. Da hierbei eine speziell gegen Fehlfunktion geschützte Implementierung entwickelt werden muss, kann dabei ein hoher Implementierungsaufwand entstehen.

Es sind sogenannte Watchdogs bekannt, um z.B. bei Hängen einer CPU bzw. einer Software automatisch einen Neustart erzwingen. Embedded Controller können beispielsweise einen Watchdog aufweisen. Die ausgeführte Software-Applikation muss beispielsweise hinreichend oft den Watchdog zurücksetzen. Falls dies, z.B. bei einem Hängen oder Programmabsturz nicht erfolgt, wird automatisch ein Reset ausgelöst.

Des Weiteren sind spezielle Chipkarten-CPUs (Crypto-Controller) bekannt. Die Schutzmaßnahmen eines solchen Halbleiter-ICs erfordern jedoch spezielle Entwurfs- und Fertigungsverfahren und sind daher nicht auf allgemeine CPUs übertragbar. Beispiele hierfür sind in http://www.bitkom.org/files/documents/Vortrag_4_Attacks_and_C ountermeasures_on_Embedded_Systems_INFINEON.pdf offenbart. Zum Schutz vor zufälligen und insbesondere absichtlich hervorgerufenen Fehlern, sogenannten Fault Injection Attacks oder Fehlerinjektionsangriffen, ist dabei insbesondere bekannt, eine doppelte CPU zu verwenden (Redundanz) und die Ergebnisse auf Konsistenz zu prüfen, sowie die Speicherinhalte mit Fehlererkennungs- und Fehlerkorrekturcodes zu schützen. Solche Angriffe können mit relativ einfachen Mitteln durchgeführt werden, z.B. durch Spikes auf der Versorgungsspannung.

Aus US 7,801,298 B2 und DE 10 2004 061 312 A1 ist bekannt, einen kryptographischen Algorithmus bzw. Berechnungsschritt doppelt, gemäß zwei unterschiedlichen Maskierungsalgorithmen, zu berechnen und die beiden Ergebnisse zu vergleichen. Hierbei werden zwei unterschiedliche Ergebnisse durch Anpassung der Maskierung des ersten Maskierungsalgorithmus auf das Ergebnis des zweiten Maskierungsalgorithmus, d.h. zwei unterschiedliche Arten der Maskierung, benötigt. Dadurch ist es erforderlich, dass der kryptographische Algorithmus doppelt realisiert wird, einmal gemäß dem ersten Maskierungsalgorithmus und einmal gemäß dem zweiten Maskierungsalgorithmus.

EP 2 280 511 A1 beschreibt ein System, bei dem als Schutzmaßnahe gegen Fehlerangriffe Prüfsummen der bearbeiteten Daten bei der Berechnung bestimmt und verifiziert werden. In diesem Zusammenhang ist offenbart, eine kryptographische Berechnung zu wiederholen oder probezurechnen.

In bekannten Systemen werden mehrkanalige Rechner mit einem Mehrheitsentscheid verwendet. Um den Hardwareaufwand zu reduzieren ist auch ein sogenanntes "Coded Processing" bekannt, bei dem eine Berechnung auf einem einzelnen Rechner mehrfach mit unterschiedlich codierten Werten durchgeführt wird, z.B. invertierte und nichtinvertierte Codierung. Dies ist beispielsweise in
http://tudresden.de/die_tu_dresden/fakultaeten/fakultaet_info rmatik/sysa/se/research/projects/enc_proc und
http://tudresden.de/die tu dresden/fakultaeten/fakultaet info rmatik/sysa/se/research/projects/enc proc/SIListraWhitepaper. pdf offenbart.

Ein "Coded Processing" wird insbesondere bei Softwarebasierten sicherheitskritischen Automatisierungssteuerungsrechnern verwendet, wie es auch in
http://www.computerautomation.de/steuerungsebene/safety/fachw issen/article/74386/0/Safety auf dem PC - per Software-Controller/ offenbart ist. Bei "Coded Processing" handelt es sich um ein Verfahren, das es erlaubt, mit nur einem Prozessor sicherheitsgerichtete Applikationen zu verwirklichen. Dabei werden Programmteile zunächst direkt abgearbeitet, anschließend codiert und in codierter Form nochmals abgearbeitet. Die Ergebnisse der unterschiedlichen Rechenwege werden verglichen, bei Abweichungen löst das Programm eine Abschaltung aus. Eine zusätzliche dynamische Überwachung kontrolliert die Verarbeitung und realisiert den notwendigen zweiten Abschaltweg.

Im Bahnsicherungsumfeld wird ein Vital Coded Processor verwendet, wie es auch in
http://se.inf.tudresden.de/pubs/papers/wappler2007indin.pdf beschrieben ist. Dabei wird als Codierungsvorschrift für eine Variable xc := xf * A + Bx + D verwendet (siehe z.B. ttp://www.elektronikpraxis.vogel.de/themen/embeddedsoftwareen gineering/analyseentwurf/articles/173862/index2.html). Es wird damit eine Art Maskierung, wobei der Wert in modifizierter Form vorliegt, und Fehlererkennungscode, d.h. es können Bitfehler erkannt werden, realisiert. Des Weiteren kann auch eine Manipulation des Programmsteuerflusses erkannt werden. In diesem Zusammenhang wird auch ein "Safety Code Weaving" beschrieben, bei dem eine Berechnung einmal mit uncodierten Variablen erfolgt und einmal mit codierten Variablen. Es könnten auch zwei redundante Kanäle realisiert werden, die mit unterschiedlichen Primzahlen arithmetisch codiert sind. D.h. dass beide Kanäle codiert arbeiten können, wobei je Kanal eine unterschiedliche Codierung verwendet wird. Dies ist auch in der Dissertation Ute Schiffel: Hardware Error Detection Using AN-Codes, TU Dresden, 2011, http://www.qucosa.de/fileadmin/data/qucosa/documents/6987/dis s.pdf sowie http://www.dateconference. com/proceedings/PAPERS/2008/DATE08/PDFFILES/08.1_3.PDF offenbart.

Vor diesem Hintergrund besteht eine Aufgabe der vorliegenden Erfindung darin, eine einfache und kostengünstige Überwachung von Schaltkreisen bereitzustellen.

Demgemäß wird eine Überwachungsvorrichtung zur Überwachung eines Schaltkreises vorgeschlagen, wobei der Schaltkreis eine Hauptfunktionseinheit aufweist, die eine Hauptberechnung durchführt. Die Überwachungsvorrichtung weist eine Berechnungseinheit zur Durchführung einer Testberechnung parallel zu der Durchführung der Hauptberechnung und zur Bereitstellung eines Ergebnisses der Testberechnung, wobei die Berechnungseinheit auf dem Schaltkreis angeordnet ist, eine Prüfeinheit zur Überprüfung des Ergebnisses der Testberechnung, um eine Fehlfunktion der Testberechnung zu detektieren, und eine Signalerzeugungseinheit zur Erzeugung eines Signals in Antwort auf das Ergebnis der Überprüfung und zur Übermittlung des Signals an die Hauptfunktionseinheit auf.

Durch die Anordnung der Berechnungseinheit auf demselben Schaltkreis wie die Hauptfunktionseinheit ist die Berechnungseinheit denselben Angriffen wie die Hauptfunktionseinheit ausgesetzt. Auf diese Weise können durch eine einfache Testberechnung und deren Kontrolle Angriffe erkannt werden, ohne die Hauptfunktionseinheit bzw. deren Ergebnis aufwendig überwachen bzw. prüfen zu müssen. Im Unterschied zu bekannten Systemen überwacht die Überwachungsvorrichtung nicht die Hauptfunktionseinheit, sondern eine eigene Berechnungseinheit, die als Testfunktion dient. Diese kann einfacher gestaltet sein als die tatsächliche Hauptfunktionseinheit.

Der Schaltkreis kann beispielsweise ein FPGA (field programmable gate array) oder ASIC (application specific integrated circuit) sein. Eine Hauptfunktion oder Hauptberechnung, d.h. die eigentliche Funktion, die auf dem Schaltkreis ausgeführt wird, wird parallel mit der Testberechnung durchgeführt. Die Testberechnung reagiert auf Fehlerangriffe oder Fehlerinjektionsangriffe (fault injection attacks) ebenso wie die Hauptfunktion, da diese auf demselben Schaltkreis bzw. Chip angeordnet sind. Bei einer erkannten Fehlfunktion der Testberechnung kann auf einen wahrscheinlichen Angriff geschlossen werden und beispielsweise eine Ausgabe des Ergebnisses der Hauptfunktion unterbunden werden.

Es wird dabei also nicht die gegebenenfalls komplexe Hauptfunktion selbst fehlergeschützt realisiert, sondern es wird durch die Überwachungsvorrichtung bzw. die Berechnungseinheit eine separate Testfunktion fehlergeschützt berechnet. Diese Testberechnung erfolgt nur zu dem Zweck, eine Fehlfunktion zu erkennen. Da auf einem FPGA oder ASIC mehrere Funktionen parallel berechnet werden, führt ein Fehlerangriff mit hoher Wahrscheinlichkeit nicht nur zu einer fehlerhaften Berechnung der Hauptfunktion, sondern auch zu einer fehlerhaften Berechnung der Testfunktion. Für einen erfolgreichen Fault Injection Angriff auf die Hauptfunktion müsste der Angreifer einen Fehler derart hervorrufen, dass zwar die Hauptfunktion ein bestimmtes Fehlerverhalten aufweist, aber nicht die Testfunktion. Da beide gleichzeitig auf derselben Hardware, d.h. Schaltkreis, ausgeführt werden, ist ein solcher getrennter Angriff schwierig durchzuführen. Insbesondere sind Angriffe über Außenschnittstellen eines Halbleiter-ICs (z.B. FPGA Chip), also ohne Öffnen des Chips, kaum so durchzuführen, dass nur ein einzelner Teil gezielt eine Fehlfunktion aufweist.

Es muss also nicht die Hauptfunktion selbst fehlertolerant bzw. fehlererkennend realisiert werden, sondern nur eine funktional sehr einfache und damit ressourcensparend realisierbare Testschaltung bzw. Testberechnung der Überwachungsvorrichtung, auch Fault Injection Monitor genannt. Dadurch werden geringere Ressourcen benötigt als bei einer redundanten Realisierung einer komplexen Hauptfunktion, wie es bei bekannten Systemen der Fall ist.

Die Testberechnung bzw. die Berechnungseinheit, die die Testberechnung durchführt, kann mit unterschiedlichen Hauptfunktionen, d.h. Hauptberechnungen, bzw. Hauptfunktionseinheiten, die die Hauptfunktionen durchführen, verwendet werden. Die Überwachungsvorrichtung kann zu bestehenden Designs von unterschiedlichen Hauptfunktionen hinzugefügt werden. Durch die Überwachungsvorrichtung werden zwar nicht zufällige Fehlfunktionen der Hauptfunktion erkannt oder verhindert, wie es bei Safety-relevanten Hauptfunktionen (funktionale Sicherheit) erforderlich wäre. Aber eine von Außen gezielt herbeigeführte Fehlfunktion, z.B. durch Betrieb unter unzulässigen Temperaturbereichen, Bestrahlung des ICs, oder durch Spikes der Versorgungsspannung oder ungültige Taktsignale, kann mit hoher Zuverlässigkeit und geringem Aufwand erkannt werden. Dabei kommt es, wie oben beschrieben, nicht nur zu einer Fehlfunktion der Hauptfunktion, sondern auch zu einer Fehlfunktion der Testfunktion bzw. Testberechnung der Berechnungseinheit. Durch die vorgeschlagene Überwachungsvorrichtung kann daher ein einfach realisierbarer und ressourcensparender Schutz vor einfach durchführbaren Fehlerangriffen bereitgestellt werden.

Gemäß einer Ausführungsform basiert die Fehlfunktion auf einem Angriff, insbesondere einem Fehlerinjektionsangriff.

Durch Angriffe von außen, wie beispielsweise sogenannte Fehlerinjektionsangriffe (fault injection attacks), wird nicht nur die Hauptfunktionseinheit beeinflusst, sondern auch die Berechnungseinheit und andere Einheiten, die auf demselben Schaltkreis angeordnet sind. Daher kann eine Fehlfunktion der Berechnungseinheit bzw. der Testberechnung als potentieller Angriff auf die Hauptfunktion gewertet werden.

Gemäß einer weiteren Ausführungsform ist die Signalerzeugungseinheit dazu eingerichtet, das Signal derart zu erzeugen, dass es Informationen aufweist, um eine Aktion der Hauptfunktionseinheit zu veranlassen.

Das Signal kann beispielsweise Steuerinformationen aufweisen, die eine Steuerung der Hauptfunktionseinheit zu Aktionen veranlassen. Das Signal kann auch als Alarmsignal (fault injection alarm) bezeichnet werden, da es einen Hinweis auf einen potentiellen Angriff gibt.

Gemäß einer weiteren Ausführungsform weist die Aktion ein Löschen von Speicherinhalten, Deaktivieren von Ausgabeschnittstellen, Initiieren eines Neustarts und/oder ein Anhalten der Hauptberechnung der Hauptfunktionseinheit auf.

Auf diese Weise kann eine Ausgabe eines fehlerhaft bestimmten Ergebnisses der Hauptberechnung verhindert werden, durch welches ein potentieller Angreifer Informationen erhalten könnte. Es kann auch bei Erkennen eines Fehlerangriffs die weitere Durchführung der Hauptberechnung angehalten werden.

Gemäß einer weiteren Ausführungsform ist die Berechnungseinheit dazu eingerichtet, bei der Testberechnung eine Berechnung einer Funktion mit einem bekannten Sollwert durchzuführen. Dabei ist die Prüfeinheit dazu eingerichtet, das Ergebnis der Testberechnung mit dem bekannten Sollwert zu vergleichen.

Gemäß dieser Ausführungsform ist das zu erwartende Ergebnis bekannt. Ein Vergleichen des tatsächlichen Ergebnisses mit dem zu erwartenden Ergebnis, d.h. dem Sollwert, gibt bei einer Abweichung einen Hinweis auf einen potentiellen Angriff. Dies wird auch als Built-in test oder known answer test bezeichnet.

Gemäß einer weiteren Ausführungsform ist die Berechnungseinheit dazu eingerichtet, die Testberechnung mehrfach durchzuführen. Dabei ist die Prüfeinheit dazu eingerichtet, die Ergebnisse der mehrfachen Testberechnung zu vergleichen.

Dies kann auch als redundante Berechnung bezeichnet werden. Es können hierbei mehrfache parallele oder nacheinander durchgeführte Testberechnungen vorgesehen sein, deren jeweiliges Ergebnis auf Konsistenz geprüft wird. Diese können in einer Implementierung mit unterschiedlich codierten Testdaten berechnet werden.

Gemäß einer weiteren Ausführungsform ist die Prüfeinheit dazu eingerichtet, das Ergebnis der Testberechnung mittels Fehlererkennungscodes zu überprüfen.

Bei sogenannten Fehlererkennungscodes können Codekombinationen nach speziellen Regeln erzeugt werden, sodass durch bestimmte auftretende Fehler eine Codekombination entsteht, die als nicht gültig erkannt werden kann. Es können auch Prüfsummen erzeugt und überprüft werden.

Gemäß einer weiteren Ausführungsform ist die Berechnungseinheit dazu eingerichtet, die Testberechnung mit codierten Daten durchzuführen. Dabei ist die Prüfeinheit dazu eingerichtet, das codierte Ergebnis zu überprüfen.

Bei dem sogenannten Coded Processing erfolgt die Berechnung mit codierten Daten, wobei Fehler in den Daten oder im Programmfluss anhand des codierten Ergebniswerts erkannt werden können.

Gemäß einer weiteren Ausführungsform weist die Berechnungseinheit einen Zähler, insbesondere einen zyklischen Zähler, auf.

Ein solcher Zähler weist eine Mehrzahl, zumindest zwei, Zustände auf, wobei zwischen diesen Zuständen geschaltet wird. Bei einem zyklischen Zähler wird beispielsweise von Zustand Z0 in Zustand Z1 und von diesem in Zustand Z2 geschaltet. Anschließend wird erneut in Zustand Z0 geschaltet. Bei einem Angriff wird beispielsweise ein Zustand übersprungen, so dass dies als Fehlfunktion erkannt werden kann.

Gemäß einer weiteren Ausführungsform ist der Zähler ein Zustandsautomat.

Der Zustandsautomat, oder endliche Automat, kann beispielsweise mit einer Randomisierung verknüpft werden. Das bedeutet, dass ein Randomisierungsparameter, der zufällig wählbar ist, durch die Testberechnung verwendet wird. Der Randomisierungsparameter kann z.B. mit der Zustandscodierung des endlichen Automaten exklusiv-oder oder additiv oder multiplikativ verknüpft werden. Durch die wechselnde, von außen nicht vorhersagbare Randomisierung wird ein gezielter Fehlerangriff zusätzlich erschwert.

Gemäß einer weiteren Ausführungsform ist die Signalerzeugungseinheit dazu eingerichtet, das Signal zeitlich versetzt zu übermitteln.

Durch die zeitlich versetzte Übermittlung wird eine Aktion der Hauptfunktionseinheit verzögert zu der Erkennung einer Fehlfunktion ausgelöst. Auf diese Weise kann es einem Angreifer erschwert werden, zu erkennen, wann ein Angriff erfolgreich war.

Gemäß einer weiteren Ausführungsform ist die Berechnungseinheit anfälliger auf Angriffe eingerichtet als die Hauptfunktionseinheit.

Die Berechnungseinheit kann hierzu beispielsweise mit einer größeren Taktfrequenz betrieben werden als die Hauptfunktionseinheit oder sie kann gezielt zumindest einen kritischen Timing-Pfad aufweisen, der größer ist als der kritischste Pfad der Hauptfunktionseinheit. Dadurch kann erreicht werden, dass es bei der Berechnungseinheit unter unzulässigen Umgebungsbedingungen, d.h. einem Angriff, früher zu einer Fehlfunktion kommt als bei der Hauptfunktionseinheit.

In einer Ausführungsform kann die Realisierung der Überwachungsvorrichtung auf einem System-on-Chip-Baustein, der eine FPGA-Baugruppe und eine CPU-Baugruppe aufweist, erfolgen. Die Überwachungsvorrichtung ist dabei auf der FPGA-Baugruppe realisiert. Bei einer erkannten Fehlfunktion kann eine zweite Funktion der FPGA-Baugruppe gesperrt werden. Hierbei kann es sich insbesondere um eine kryptographische Operation handeln. In einer Ausführungsform kann der Status der Überwachungsvorrichtung durch die CPU-Baugruppe, d.h. mittels Software-Programmen, abgefragt und gegebenenfalls zurückgesetzt werden. In einer Ausführungsform kann bei erkanntem Fehler ein Unterbrechen (Interrupt) oder Zurücksetzen (Reset) der CPU ausgelöst werden. So kann ein Neustart erzwungen werden, oder es kann eine Software-Routine zur Behandlung des Fehlerzustands aktiviert werden.

Gemäß einem weiteren Aspekt wird ein Schaltkreis mit einer Hauptfunktionseinheit, die eine Hauptberechnung durchführt, und einer wie oben erläuterten Überwachungsvorrichtung zur Überwachung des Schaltkreises vorgeschlagen.

Ein solcher Schaltkreis kann insbesondere eine integrierte Schaltung sein. Hierzu zählen unter anderem FPGAs (Field Programmable Gate Array) und ASICs (Application-Specific Integrated Circuit).

Gemäß einem weiteren Aspekt wird ein Verfahren zur Überwachung eines Schaltkreises vorgeschlagen, wobei der Schaltkreis eine Hauptfunktionseinheit aufweist, die eine Hauptberechnung durchführt. Das Verfahren weist die folgenden Schritte auf: Berechnen einer Testberechnung in einer Berechnungseinheit parallel zu der Hauptberechnung, wobei die Berechnungseinheit auf dem Schaltkreis angeordnet ist, Bereitstellen eines Ergebnisses der Testberechnung, Überprüfen des Ergebnisses der Testberechnung, um eine Fehlfunktion der Testberechnung zu detektieren, Erzeugen eines Signals in Antwort auf das Ergebnis des Überprüfens, und Übermitteln des Signals an die Hauptfunktionseinheit.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockschaltbild eines Schaltkreises mit einer Überwachungsvorrichtung und einer Hauptfunktionseinheit;
- Fig. 2: zeigt ein schematisches Blockschaltbild eines zyklischen Zählers einer Überwachungsvorrichtung;
- Fig. 3: zeigt ein schematisches Blockschaltbild eines Zustandsautomaten für den zyklischen Zähler von Fig. 2; und
- Fig. 4: zeigt ein Ablaufdiagramm eines Ausführungsbeispiels eines Verfahrens zur Überwachung eines Schaltkreises.

In den Figuren sind gleiche oder funktionsgleiche Elemente mit denselben Bezugszeichen versehen worden, sofern nichts anderes angegeben ist.

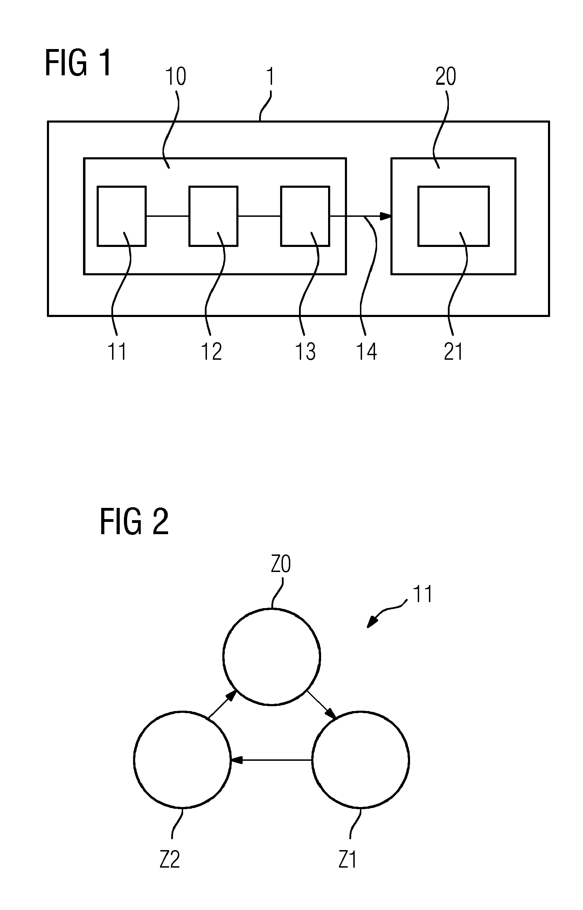

Fig. 1 zeigt einen Schaltkreis 1, der eine Überwachungsvorrichtung 10 zur Überwachung des Schaltkreises 1 sowie eine Hauptfunktionseinheit 20 aufweist.

Die Hauptfunktionseinheit 20 führt eine Hauptberechnung durch. Um einen Angriff auf den Schaltkreis 1 bzw. die Hauptfunktionseinheit 20 auf dem Schaltkreis 1 zu detektieren, ist eine Überwachungsvorrichtung 10 vorgesehen. Die Überwachungsvorrichtung 10 dient dazu, insbesondere Fehlerinjektionsangriffe zu erkennen und eine Funktion, wie beispielsweise ein Ausgeben eines Ergebnisses der Hauptfunktionseinheit 20, zu verhindern oder eine Funktion, wie einen Neustart, der Hauptfunktionseinheit zu verursachen.

Die Überwachungsvorrichtung 10 weist eine Berechnungseinheit 11 auf, die parallel zu der Durchführung der Hauptberechnung eine Testberechnung durchführt. Sofern ein Angriff auf den Schaltkreis 1 erfolgt, ist die Testberechnung ebenso wie die Hauptberechnung betroffen und wird daher ebenfalls ein fehlerhaftes Ergebnis liefern. Obwohl in Fig. 1 alle Einheiten der Überwachungsvorrichtung 10 auf dem Schaltkreis 1 angeordnet sind, ist es lediglich erforderlich, dass die Berechnungseinheit 11 auf dem Schaltkreis angeordnet ist, um denselben Angriffen wie die Hauptfunktionseinheit ausgesetzt zu sein.

Das Ergebnis der Testberechnung wird einer Prüfeinheit 12 bereitgestellt, die dieses Ergebnis überprüft, um eine Fehlfunktion der Testberechnung zu detektieren. Sofern das Ergebnis als fehlerhaft eingestuft wird, so wird in einer Signalerzeugungseinheit 13 ein Signal 14, sogenannter FI-Alarm (Fault Injection Alarm) erzeugt und an die Hauptfunktionseinheit 20 übermittelt.

Die Hauptfunktionseinheit 20 kann dann eine Funktion, beispielsweise über eine Steuerung 21, durchführen. Hierzu zählen unter anderem ein Neustart der Hauptberechnung, ein Nicht-Versenden des Ergebnisses, ein Aussenden eines Dummy-Signals oder ähnliches. Ziel hierbei ist, einem potentiellen Angreifer keine relevanten Informationen über die Hauptberechnung zu liefern. Die Steuerung kann eine Digitalschaltung, z.B. eine Ein-Ausgabe-Einheit, die die Schnittstelle deaktiviert, oder eine CPU sein, die z.B. einen Interrupt auslösen kann, sodass eine Fehlerbehandlungsroutine aufgerufen wird.

Wie in Fig. 2 gezeigt, kann die Berechnungseinheit 11 beispielsweise ein Zähler mit redundanter Codierung der Zählerzustände sein. Dieser kann mehrfach vorhanden sein. Hierbei wird ein Vergleich (Monitoring) auf Korrektheit des Zählerwerts und gegebenenfalls auf Konsistenz der Zählerwerte durchgeführt. Eine mögliche Realisierung eines Zählers ist ein zyklischer Zähler, wie er in Fig. 2 gezeigt ist. Dieser zählt Z0 -> Z1 -> Z2 -> Z0 und so fort.

Die Codierung für die Zustände Z0, Z1, Z2 kann dabei z.B. wie folgt gewählt werden:
Z0: 0110 1101
Z1: 1011 1011
Z2: 0010 0101

In einer Implementierung werden die Zustände abhängig von einem zur Ausführung wechselnden Randomisierungsparameter r randomisiert. Dazu kann durch einen Zufallszahlengenerator der Parameter r ermittelt werden, z.B. bei jedem Systemstart oder in regelmäßigen Zeitabständen. Ein Zustand Zi wird dann als Zi':= Zi XOR r randomisiert codiert.

Die Werte für Z0, Z1, Z2 können z.B. bei der Entwicklung zufällig ermittelt werden, oder gemäß einer deterministischen Berechnungsfunktion als Entwurfsparameter ermittelt werden. Bei einer deterministischen Berechnungsfunktion können die Werte z.B. als Hashwert der Zeichenketten Z0, Z1, Z2 bestimmt sein. Die einzelne Bits können auch als Prüfbits, z.B. Parity-Bit oder CRC-Prüfsumme, bestimmt sein.

Bei dem zyklischen Zähler werden nun Funktionen zur Berechnung des Nachfolgezustands ausgehend vom aktuellen Zustand gebildet. Diese werden so konstruiert, dass ein in einem oder mehreren Bits unterschiedlicher Wert zu einem ungültigen Wert führt. So kann z.B. für jedes Bit des Nachfolgezustands der erwartetet Wert von 4 oder 6 Bits des aktuellen Zustands geprüft werden.

Bei dem in Fig. 2 gezeigten Zähler werden die Zählerzustände Z0, Z1, Z2 als 8-bit-großes Datenwort codiert. Dafür können z.B. zufällig gewählte Bitwerte gewählt werden.

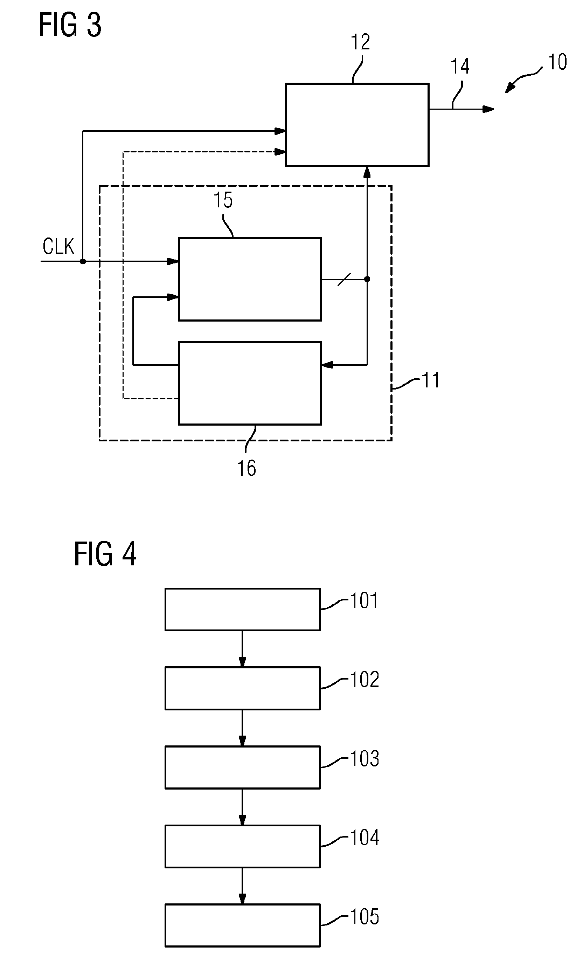

Ein Zustandsautomat für den zyklischen Zähler von Fig. 2 ist in Fig. 3 gezeigt. Bei einem Zustandsübergang wird der Nachfolgewert durch die Zustandsübergangsfunktion 16 (State Transition Function) als logische Operation abhängig vom aktuellen Zustand berechnet. Dies kann beispielsweise durch Exklusiv-Oder-Verknüpfung des aktuellen Werts im Zustandsregister 15 (State Register) mit einem festen Wert erfolgen. Es können auch komplexere logische Funktionen realisiert werden, z.B. unter Verwendung von Und, Oder und Negations-Verknüpfungen. Insbesondere können absichtlich Verzögerungen eingebaut werden, z.B. durch funktional redundante Logikelemente wie eine Kette von Invertern, um die Überwachungsvorrichtung 10 bzw. die Berechnungseinheit 11 absichtlich zeitkritisch, d.h. langsamer, zu gestalten als die Hauptfunktionseinheit 20.

Wenn nun ein Fehlerangriff durchgeführt wird, so kann es zu einem Bitfehler kommen oder zu einem Überspringen eines Zustands. Dies führt dazu, dass mit hoher Wahrscheinlichkeit im Zustandsregister 15 ein ungültiger Wert steht. Ein Zustandsverifizierer (State Verifier), der die Prüfeinheit 12 darstellt, überprüft nun, ob der Wert im Zustandsregister 15 einer der (hier drei) gültigen Werte ist. Bei einer Abweichung wird ein FI-Alarm-Signal 14 bereitgestellt. Sobald ein ungültiger Zustand detektiert wurde, kann die Information gespeichert werden. Dies kann beispielsweise redundant geschehen. In einer Variante ist der Fehlerspeicher rücksetzbar. In einer Variante, die mit einer gestrichelten Linie in Fig. 3 dargestellt ist, überprüft die Prüfeinheit 12 neben dem Wert des Zustandsregisters 15 auch den durch die Zustandsübergangsfunktion 16 ermittelten Wert des Nachfolgezustands.

In einer Ausführungsform kann der Zählerblock doppelt oder n-fach vorgesehen sein. Der Zustandsverifizierer 12 kann dann auch die Werte der mehreren Zähler Z0, Z1, Z2 überprüfen. Es kann dabei jeder Zählerwert individuell darauf geprüft werden, ob es sich um einen zulässigen Zählerwert handelt. Es kann aber auch die Konsistenz der Zählerwerte untereinander geprüft werden. Im einfachsten Fall erfolgt dazu eine Identitätsprüfung. Die Zählerwerte können jedoch unterschiedlich codiert sein und die Zähler Z0, Z1, Z2 können unterschiedlich große Zählbereiche aufweisen. Es kann dann eine Konsistenzprüfung der unterschiedlichen Zähler Z0, Z1, Z2 erfolgen.

Die Zähler Z0, Z1, Z2 können insbesondere so konstruiert sein, dass sie unterschiedlich lange kritische Pfade aufweisen. Ein Zähler Z0, Z1, Z2 kann dabei einen längeren kritischen Pfad als die Hauptberechnung der Hauptfunktionseinheit 20, ein anderer Zähler Z0, Z1, Z2 kann dabei einen kürzeren kritischen Pfad als die überwachte Hauptberechnung der Hauptfunktionseinheit 20 aufweisen. Dadurch kann erkannt werden, wenn ein Taktzyklus zu kurz ist, d.h. es zu einem Überspringen eines Zustandsübergangs beim langsameren Zähler Z0, Z1, Z2 kommt. Der schnellere Zähler, der auch bei höheren Taktfrequenzen die durch den Takt CLK vorgegeben sind, noch korrekt funktioniert, würde dagegen einen Zählerwert weiter sein. Die beiden inkonsistenten Zählerwerte können als Fehler erkannt werden.

In einer Variante wird nicht ein Taktsignal CLK des Schaltkreises bzw. Chips 1 verwendet, sondern die Überwachungsvorrichtung 10 enthält selbst einen Taktgenerator, der z.B. als rückgekoppelter Ringoszillator realisiert sein kann.

Fig. 4 zeigt ein Verfahren zur Überwachung eines Schaltkreises 1. Wie beispielsweise in Fig. 1 gezeigt ist, weist der Schaltkreis 1 eine Hauptfunktionseinheit 20 auf, die eine Hauptberechnung durchführt.

In einem ersten Schritt 101 wird eine Testberechnung in einer Berechnungseinheit 11 parallel zu der Durchführung der Hauptberechnung durchgeführt. Wie in Fig. 1 gezeigt ist die Berechnungseinheit 11 auf dem Schaltkreis 1 angeordnet.

In einem zweiten Schritt 102 wird ein Ergebnis der Testberechnung bereitgestellt.

In einem dritten Schritt 103 wird das Ergebnis der Testberechnung überprüft, um eine Fehlfunktion der Testberechnung zu detektieren.

Anschließend wird in einem vierten Schritt 104 ein Signal 14 in Antwort auf das Ergebnis des Überprüfens erzeugt und in einem fünften Schritt 105 an die Hauptfunktionseinheit 20 übermittelt.

Obwohl die vorliegende Erfindung anhand von Ausführungsbeispielen beschrieben wurde, ist sie vielfältig modifizierbar.

## Patentansprüche

1. Überwachungsvorrichtung (10) zur Überwachung eines Schaltkreises (1), wobei der Schaltkreis (1) eine Hauptfunktionseinheit (20) zur Durchführung einer Hauptberechnung aufweist, mit
einer Berechnungseinheit (11) zur Durchführung einer separaten Testberechnung parallel zu der Durchführung der Hauptberechnung und zur Bereitstellung eines Ergebnisses der Testberechnung, wobei die Berechnungseinheit (11) auf dem Schaltkreis (1) angeordnet ist und funktional einfacher als die Hauptfunktionseinheit (20) ausgestaltet ist,
einer Prüfeinheit (12) zur Überprüfung des Ergebnisses der Testberechnung, um eine Fehlfunktion der Testberechnung zu detektieren, und
einer Signalerzeugungseinheit (13) zur Erzeugung eines Signals (14) in Antwort auf das Ergebnis der Überprüfung und zur Übermittlung des Signals (14) an die Hauptfunktionseinheit (20).

2. Überwachungsvorrichtung nach Anspruch 1,
**dadurch gekennzeichnet,**
**dass** die Fehlfunktion auf einem Angriff auf den Schaltkreis basiert, insbesondere einem Fehlerinjektionsangriff.

3. Überwachungsvorrichtung nach Anspruch 1 oder 2,
**dadurch gekennzeichnet,**
**dass** die Signalerzeugungseinheit (13) dazu eingerichtet ist, das Signal (14) derart zu erzeugen, dass es Informationen aufweist, um eine Aktion der Hauptfunktionseinheit (20) zu veranlassen.

4. Überwachungsvorrichtung nach 3,
**dadurch gekennzeichnet,**
**dass** die Aktion ein Löschen von Speicherinhalten, ein Deaktivieren von Ausgabeschnittstellen, ein Initiieren eines Neustarts und/oder ein Anhalten der Hauptberechnung der Hauptfunktionseinheit (20) aufweist.

5. Überwachungsvorrichtung nach einem der Ansprüche 1-4,
**dadurch gekennzeichnet,**
**dass** die Berechnungseinheit (11) dazu eingerichtet ist, bei der Testberechnung eine Berechnung einer Funktion mit einem bekannten Sollwert durchzuführen, und dass die Prüfeinheit (12) dazu eingerichtet ist, das Ergebnis der Testberechnung mit dem bekannten Sollwert zu vergleichen.

6. Überwachungsvorrichtung nach einem der Ansprüche 1-5,
**dadurch gekennzeichnet,**
**dass** die Berechnungseinheit (11) dazu eingerichtet ist, die Testberechnung mehrfach durchzuführen, und dass die Prüfeinheit (12) dazu eingerichtet ist, die Ergebnisse der Testberechnungen zu vergleichen.

7. Überwachungsvorrichtung nach einem der Ansprüche 1-6,
**dadurch gekennzeichnet,**
**dass** die Prüfeinheit (12) dazu eingerichtet ist, das Ergebnis der Testberechnung mittels Fehlererkennungscodes zu überprüfen.

8. Überwachungsvorrichtung nach einem der Ansprüche 1-7,
**dadurch gekennzeichnet,**
**dass** die Berechnungseinheit (11) dazu eingerichtet ist, die Testberechnung mit codierten Daten durchzuführen, und dass die Prüfeinheit (12) dazu eingerichtet ist, das codierte Ergebnis zu überprüfen.

9. Überwachungsvorrichtung nach einem der Ansprüche 1-8,
**dadurch gekennzeichnet,**
**dass** die Berechnungseinheit (11) einen Zähler aufweist, insbesondere einen zyklischen Zähler.

10. Überwachungsvorrichtung nach Anspruch 9,
**dadurch gekennzeichnet,**
**dass** der Zähler ein Zustandsautomat ist.

11. Überwachungsvorrichtung nach einem der Ansprüche 1-10,
**dadurch gekennzeichnet,**
**dass** die Signalerzeugungseinheit (13) dazu eingerichtet ist, das erzeugte Signal (14) zeitlich versetzt an die Hauptfunktionseinheit (20) zu übermitteln.

12. Überwachungsvorrichtung nach einem der Ansprüche 1-11,
**dadurch gekennzeichnet,**
**dass** die Berechnungseinheit (11) derart eingerichtet ist, dass sie anfälliger für Angriffe als die Hauptfunktionseinheit (20) ist.

13. Schaltkreis (1), mit:
einer Hauptfunktionseinheit (20) zur Durchführung einer Hauptberechnung, und
einer Überwachungsvorrichtung (10) zur Überwachung des Schaltkreises (1) nach einem der Ansprüche 1-12.

14. Verfahren zur Überwachung eines Schaltkreises (1), wobei der Schaltkreis (1) eine Hauptfunktionseinheit (20) zur Durchführung einer Hauptberechnung aufweist, mit
Durchführen (101) einer separaten Testberechnung in einer Berechnungseinheit (11) parallel zu der Durchführung der Hauptberechnung, wobei die Berechnungseinheit (11) auf dem Schaltkreis (1) angeordnet ist und funktional einfacher als die Hauptfunktionseinheit (20) ausgestaltet ist,
Bereitstellen (102) eines Ergebnisses der Testberechnung,
Überprüfen (103) des Ergebnisses der Testberechnung, um eine Fehlfunktion der Testberechnung zu detektieren,
Erzeugen (104) eines Signals (14) in Antwort auf das Ergebnis des Überprüfens, und
Übermitteln (105) des Signals (14) an die Hauptfunktionseinheit (20).

15. Computerprogrammprodukt, welches auf einer programmgesteuerten Einrichtung die Durchführung des Verfahrens nach Anspruch 14 veranlasst.
